# EUROPEAN PATENT SPECIFICATION

(11) **EP 2 219 166 B1**
(45) Date of publication and mention of the grant of the patent: **11.07.2012**
(21) Application number: 07872849.0
(22) Date of filing: 01.11.2007
(51) Int. Cl.: G08G 1/017

(54) **TRAFFIC MONITORING SYSTEM**
VERKEHRSÜBERWACHUNGSSYSTEM
SYSTÈME DE SURVEILLANCE DE LA CIRCULATION ROUTIÈRE

(43) Date of publication of application: 18.08.2010
(73) Proprietor: Matsur, Igor Yurievich, Tula 300053 (RU)
(72) Inventor: Matsur, Igor Yurievich, Tula 300053 (RU)
(74) Representative: Fischer, Franz
(86) International application number: PCT/RU2007/000604
(87) International publication number: WO 2009/058043

(56) References cited:
- DE-A1-102005 035 242
- RU-C1- 2 084 961
- RU-C1- 2 298 215
- RU-U1- 28 256
- RU-U1- 62 726
- SU-A1- 492 211
- US-A1- 2005 206 531
- US-A1- 2006 261 979
- US-B1- 6 226 497
- Lawrence A.Klein: "Sensor technologies and data requirements for ITS", 1 January 2001 (2001-01-01), Artech House ISBN: 1-58053-077-X pages 346-347,

## Description

The invention relates to devices for monitoring of traffic flows of vehicles, and can be used together with communication systems for automatic monitoring of traffic laws (TL) compliance, automatic decision making regarding TL violations and communication of those decisions to traffic laws violators, without direct human intervention. Additionally, the system provides for automatic notification of law enforcement authorities regarding abnormal events on the roads, such as detection of abusive use of vehicles, and control over decisions regarding TL violations.

### Background Art

Various automatic (hard- and software) systems for vehicles monitoring are known, which are based on image identification, and include video cameras, computers for identifying the vehicles, each of which is connected via a cable connection to a corresponding video camera, and a server for control and search for the vehicle in a database. The server is normally connected to the computers using a local area cabled network (see prospectus of BAGS (Belgian Advanced Technology Systems S.A.), (Par Industriel de Recherches du Sart-Tilman, Avenue des Noisetiers 8, B-4031, Bangleur-Belgique).

However, such systems are typically used only for parked vehicles, or when they cross vehicle inspection stations, but not in conditions of heavy multi-lane traffic.

Also known is a multi-zone system for monitoring movement of vehicles, which consists of multiple stationary monitoring zones located on the roads, where each such zone has a light source positioned above the road, video cameras for detecting and identifying vehicles. The video cameras are angled downward relative to the horizontal plane, and with their objective lenses positioned facing the flow of traffic. There is also a control unit for coordination of the work of the video cameras as well as some computers located in a remote point (center) which serve for identifying the vehicles, a server with a monitor for controlling and searching for the vehicles in the database, which is connected to the identifying computers via a local area cabled network. The identifying video cameras are also connected to the computers (see application PCT WO 93/19441, publ. 30. 09. 93, cl. G 08 G 1/017). This system also suffers from the same disadvantages as the previously described system, and is primarily intended for identifying and searching for stolen vehicles. It requires human intervention, cable communication and a substantial technological base.

A multi-zone traffic control system is known, that includes a mobile monitoring checkpoint and multiple stationary monitoring zones, each of which is an approximate rectangle that encloses a particular local section of a road, and various switches located near the road at a predetermined distance from the rectangle. Each monitoring zone has video cameras, lights, and a separator for traffic lanes and traffic directions. The system also includes hard- and software unit, installed in the mobile monitoring point. The unit also includes computers for identifying vehicles, which for some predetermined time get connected to the video cameras through the switches, a server for controlling and searching for vehicles in the database, a local area cabled network, a video monitoring system connected to the video camera through a switch, a connection to the phone network, and a telecommunication system (see RU Patent No. 2137203).

This system, same as the system described above, is substantially a local one; it requires indispensable lighting of the road sections being monitored, a substantial amount of special technological means, cabled networks, as well as human involvement for evaluating of the situation on the road and making appropriate decisions.

An electronic identification system is known, that includes a personal computer connected to a server-collector that collects vehicle data, at least one or three electronic marks or tags (ET), installed on the vehicle, and a hand-hold or stationary device connected to the personal computer for collecting the information, typically employing a contact reader for reading the information stored in the ET. The tag, often attached near the license plate, contains information about the vehicle make, color, engine power, vehicle identification number, registration and license plate number, as well as the date of the last vehicle inspection. ET located on the front windshield, can include information about the vehicle make, its registration number, owner information, information regarding the cargo being transported, cargo source and destination information, vehicle identification number, its service record book number, the registration number of repair facility.

ET located under the hood or directly on the engine, can include information about the numbers of engine, chassis, the car body number, engine power, and the year of manufacture of the vehicle. The system provides for expansion of functional capabilities by providing ability to look for stolen vehicles, protection of manufacturing information from forgery, protection of license plate from being stolen and placed on some other vehicle, automatic monitoring of cargo security, allocation of parking space and parking space rights, monitoring of vehicle service undergoing, rapid transmittal of full information regarding the owner of the vehicle in the event of an accident, estimate of transport means military mobilization resources in case of emergency situation or military operations. (See Russian Patent No. 2185663, publ. 20.07.2002, MPK 7 G08G 1/017, B60R 28/00, B60 R I3/10).

This system is also generally of local nature, and can be used at vehicle inspection points, service stations, paid parking lots, etc. The system also generally requires human intervention, and is primarily directed to the detection of stolen vehicles.

DE10 2005 035242 A1 describes a multi-purpose monitoring system with several monitoring devices having different sensors. The measuring results of these devices can be combined. The described method is carried out continuously in staggered road sections. The monitoring is carried out in autonomous units which interact in a communication system.

### Summary of the Invention

The objective of the present invention and its technical result is creating of an automatic system for monitoring of TL compliance and for situational awareness on the roads, with a significant reduction in involvement of human personnel in providing road safety.

At the same time, the system is simple for embodiment at minimum costs in terms of its manufacture and use. The additional advantage of the system is the fact that the system is provided with unlimited possibility of road network coverage, also owing to its continuous expansion.
The invention is defined in independent claim 1.

The mentioned objective is achieved through the fact that in the traffic monitoring system, in which vehicles are equipped with identification means, and which includes multiple stationary traffic monitoring points (STMP), equipped with devices for reading vehicle information, STMP for traffic monitoring are preferably in the form of compact electronic digital computers (CEDC) with built-in modules for cellular connection and with automatic photo, video and radio information reading and processing devices regarding the vehicle and the road situation. The points are also equipped with automatic devices for determination of the parameters of vehicle movement, and comparison of the information regarding vehicle movement with that permitted by traffic laws (TL) for the particular section of the road. The system also includes software tools for automatic determination of TL violations as well as abnormal events, and making decisions regarding them, automatic transmission of information or the decisions regarding TL violators and abnormal events through a mobile network from STMP to a base station of the nearest mobile communication operator, and ultimately, by means of the internet, to a database system (DBS) of the Traffic Safety Inspectorate (TSI).

The decision-making programmers can be provided either at the STMP or at the DBS TSI.

Additionally, the system can be provided with software tools for communicating the information on the decisions made regarding the violation to the violator for their execution, or software for the execution controlling, or software for communicating the decisions made regarding the abnormal situation to the vehicle inspection posts via connection network.

Each STMP can be equipped with automatic means for electromagnetic reading of information regarding moving vehicles, in the form of at least one photo camera working in the visible spectrum and/or at least one video camera working in the visible spectrum and/or at least one radio receiver and/or at least one radar and/or at least one infrared receiver and/or at least one infrared radar and/or at least one laser locator.

Each STMP can also be additionally equipped with a threshold acoustic sensor for detection and/or identification of an approaching vehicle.

Also, each STMP is provided with an autonomous and/or rechargeable battery operated energy source.

### Brief Description of the Drawings

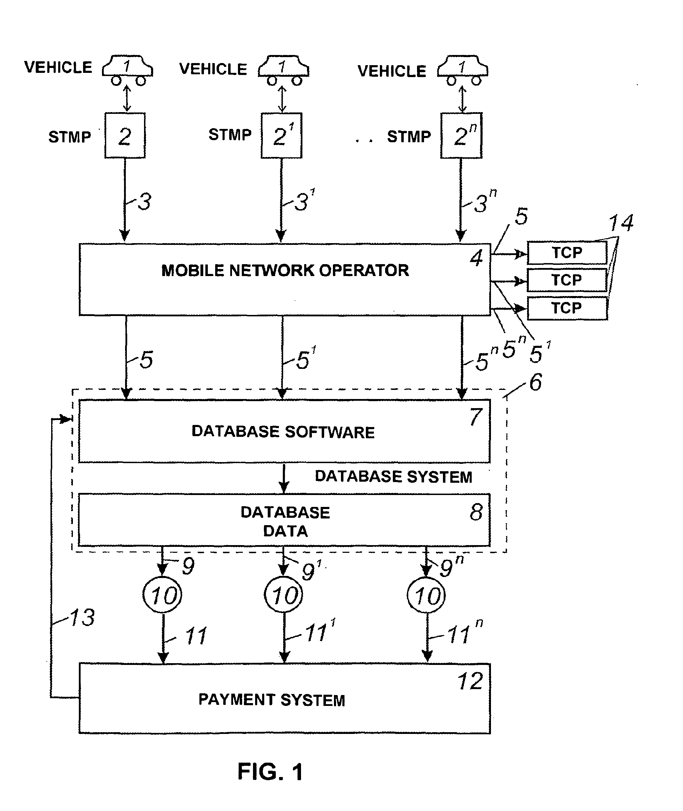

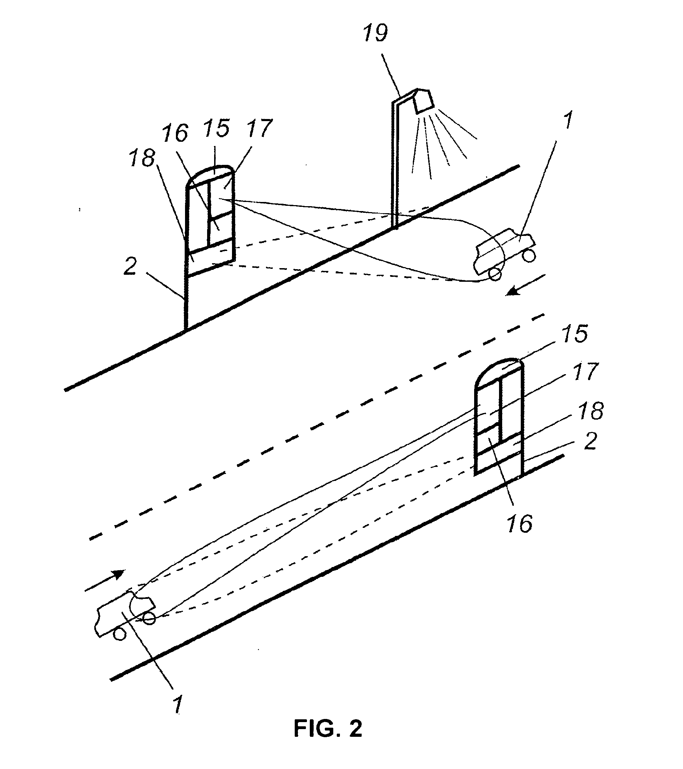

The proposed system is illustrated with figures, where Fig. 1 shows a schematic of a traffic monitoring system, and Fig. 2 shows a stationary traffic monitoring point.

The traffic monitoring system 1 includes a plurality of stationary traffic monitoring points (STMP) 2 ... 2n, which automatically receive information from moving vehicles, with subsequent determination of movement parameters of the vehicles and comparison of the parameters to those permitted under traffic laws (TL) for a particular road location. The system also includes an automatic determination of TL violations and abnormal situations and making decisions thereto, and subsequent transfer of the decisions or information regarding traffic laws violators and abnormal situations up through the channels 3 ... 3n of a mobile communication network to the nearest mobile network operator 4 . ...4n and then subsequently by means of the internet 5 ... 5n to the TSI database system (DBS) 6, which includes database software tools 7 and the vehicles database 8 of a constituent territory of the Federation, region or the whole country.

TSI DBS, basing on the decisions received from the STMP, automatically generates administrative violation citations regarding violations of traffic laws, together with attached evidentiary information, and using a global digital network 9 ... 9n and 11 ... 11 n delivers the information to the violator of the traffic laws through some electronic messages. The violator of the traffic laws, having received the electronic citation, will need to take some action (for example, to pay a fine) within some fixed time. The response of the violator is automatically registered in the TSI DBS by receiving an appropriate message from a payment system (payment terminal 12, Savings Bank branch or similar) through the communication channels 13.

To implement decisions regarding abnormal situations, the decisions can be sent directly to the vehicle inspection points (VIP) 14 of TSI.

In the preferred embodiment, the stationary traffic monitoring point (STMP) 2 can be in the form of a cellular phone (smartphone, PDA), including a cellular communication module 15, a digital electronic computer 16, that includes a module 17 for receiving data from the vehicle, for example, a photo or video camera, a receiver and/or locator, an audio sensor 18 for detecting approach of a vehicle.

If the reader described above works in a visible-light range, then the area of the road may need to be illuminated during nighttime by a lighting unit 19.

STMP may be placed on lamp posts, advertising billboards, traffic sign posts, etc.

STMP can also be provided with means for remote reprogramming (in the event of a change in the traffic regulations and situation on the road) from a mobile phone, through Bluetooth protocol, through the infrared port, etc.

STMP can also be installed in a concealed manner, in places that are inaccessible for easy discovery, damage and disassembly, and are powered from a battery, from solar power, wind power, or from the electric power grid. In addition to its license plate, according to the invention, each vehicle is equipped with an individual identification device, i.e. a radio frequency beacon such that the signal from it is received by the receiver 17 of STMP 2.

STMP of the system works in the manner as follows.

When a vehicle approaches STMP, the audio sensor (ultrasound, infrasound etc.) 18 is triggered and triggers a change in STMP from its passive mode to the active one. STMP, in its preferred embodiment, reads the information from the moving vehicle, determines the movement parameters of the vehicle, with a subsequent comparison of the parameters to those permitted under the traffic laws, for the particular portion of the road, automatically qualifies the TL violations and any abnormal situations as well as decisions made in their connection.

For example, in the case of detection of a speeding violation, passing violation, failure to maintain proper lanes, etc., STMP can itself automatically issue the citation upon the TL violation in electronic form, together with evidentiary information, and send the citation and the evidentiary information via the cellular communication network and by means of the internet to the TSI DBS.

Once the information is transmitted to the TSI DBS, the STMP automatically returns to the passive mode.

The proposed invention provides for monitoring of traffic flows, through the use of telecommunication systems for automatic monitoring of traffic laws and regulations compliance, coupled with making decisions in electronic form regarding TL violations, and also coupled with delivering the information and the traffic citations electronically, together with the evidentiary information, to the traffic violators. This can be done without direct involvement of TSI officers.

Additionally, the system also provides for recognition and identification of abnormal events on the road, traffic conditions as well as detection of vehicles being used abusively. Also, the system permits monitoring of citations issued in connection to the TL violations.

## Claims

1. An automatic traffic monitoring system including devices for reading information of vehicles equipped with identification means, for monitoring their movement in relation to their compliance with the traffic laws, wherein the system comprises automatic radio information reading as well as processing devices regarding the vehicle and the road situation, and the system comprises software tools for automatic determination of the movement parameters of vehicles and for comparing them with those permitted by traffic laws for the particular section of the road, and software tools for automatic determination of violations of traffic laws and for making decisions regarding them,
**characterized in that** the system comprises a plurality of stationary traffic monitoring points, each of them having an energy source selected from the group consisting of battery, or/and solar power, or/and wind power, or/and electric power grid,
each of the stationary traffic monitoring points comprising a cellular module for communication, automatic reading and processing devices for capturing radio information regarding the monitored vehicle and the road situation, comprising the software tool for determining automatically the movement parameters of vehicles and for comparing them with those permitted by traffic laws for the particular section of the road, and also comprising the software tool for automatic determination of violations of traffic laws and abnormal situations and for making decisions regarding them, for transmitting automatically these decisions or information regarding traffic laws violators and abnormal situations by the cellular module over a mobile network from the stationary traffic monitoring point to a base station of a communication operator, and ultimately the information is transmitted by means of the internet to a database system, the system comprising software tools for communicating the decisions regarding the abnormal situations to a vehicle inspection post, whereby each vehicle is equipped, in addition to its license plate, with an individual identification device comprising a radio frequeny beacon, such that its signal can be received by the receivers of the stationary traffic monitoring points.

2. The system according to claim 1 wherein the software tool of the database system is programmed for automatic decision making.

3. The system according to the claim 1 wherein the software tools are programmed for communicating the decisions to the violator for their execution by the mobile network and the internet.

4. The system according to claim 1, comprising a software tool which is programmed for monitoring the execution of the decisions.

5. The system according to claim 1, wherein the energy source is a rechargeable battery.

6. The system according to claim 1, wherein the automatic reading and processing devices of each stationary monitoring point for capturing radio information regarding the monitored vehicle and the road situation are able to read electromagnetically information regarding moving vehicles, and is additionally comprising at least one photo camera, which is able to work in the visible spectrum, at least one video camera which is able to work in the visible spectrum, at least one radio receiver, at least one radar, at least one infrared receiver, at least one infrared radar and/or at least one laser locator.

7. The system according to claim 6, wherein each of the stationary traffic monitoring points is additionally equipped with a acoustic threshold sensor for detection and/or identification of an approaching vehicle.

## Patentansprüche

1. Automatisches Verkehrsüberwachungssystem enthaltend Geräte zum Lesen von Informationen von Fahrzeugen, die mit Identifikationsmitteln für die Überwachung ihrer Belegungen in Bezug auf die Einhaltung der Verkehrsregeln ausgestattet sind, wobei das System automatische Funk-Informationslese- und auch Verarbeitungs-Geräte für Fahrzeug- und Strassensituationen beinhaltet, und das System Software-Tools zur automatischen Bestimmung der Bewegungsparameter von Fahrzeugen und für ihren Vergleich mit den erlaubten Verkehrsregeln für den jeweiligen Strassenabschnitt, und Software-Tools zur automatischen Bestimmung von Verkehrsregelverletzungen und für die Entscheidungsfindung darüber beinhaltet, **dadurch gekennzeichnet, dass** das System eine Vielzahl von stationären Überwachungspunkten enthält, jeder von ihnen eine Energiequelle besitzt, ausgewählt aus der Gruppe bestehend aus Batterie, oder/und Solarenergie, oder/und Windenergie oder/und elektrisches Stromnetz,
jeder der stationären Überwachungspunkte einen Mobilfunkmodul zur Kommunikation, automatische Lese- und Verarbeitungsvorrichtungen zum Erfassen von Funkinformationen über das überwachte Fahrzeug und die Strassensituation, Software-Tools für die automatische Bestimmung der Bewegungsparameter von Fahrzeugen und zu deren Vergleich mit denjenigen, die den Verkehrsregeln für den jeweiligen Abschnitt der Straße entsprechen, beinhaltet, und auch Software-Tools zur automatischen Bestimmung von Verkehrsregelverletzungen und ungewöhnlichen Situationen und für entsprechende Entscheidungsfindungen beinhaltet, zur automatischen Übertragung dieser Entscheidungen oder Informationen über Verkehrsregelverletzer und außergewöhnliche Ereignisse durch den Mobilfunkmodul über ein Mobilfunknetz vom stationären Überwachungspunkt zu einer Basisstation eines Kommunikationssystembetreibers, schließlich die Informationen über das Internet zu einem Datenbanksystem übertragen werde, das System Software-Tools zum Übermitteln der Entscheidungen betreffend die ungewöhnlichen Situationen an eine Fahrzeugkontrollstelle beinhaltet, wobei jedes Fahrzeugs zusätzlich zum Kennzeichen mit einem individuellen Identifikationsmittel ausgestattet ist, das einen Funk-Frequenzleitstrahl enthält, derart dass sein Signal von den Empfängern der stationären Verkehrsüberwachungspunkte empfangen werden kann.

2. System nach Anspruch 1, worin das Software-Tool des Datenbanksystems für die automatische Entscheidungsfindung programmiert ist.

3. System nach Anspruch 1, worin die Software-Tools programmiert sind für die Übermittlung der Entscheidungen über das Mobilfunknetz und das Internet an den Gesetzesübertreter zu ihrem Vollzug.

4. System nach Anspruch 1, enthaltend ein Software-Tool, das zur Überwachung des Vollzugs der Entscheidungen programmiert ist.

5. System nach Anspruch 1, worin die Energiequelle eine wiederaufladbare Batterie ist.

6. System nach Anspruch 1, worin die automatischen Lese- und Verarbeitungsvorrichtungen jeder stationären Überwachungsstelle, die der Erfassung von Funk-Informationen über das überwachte Fahrzeug und die Strassensituation dienen, fähig sind, elektromagnetische Informationen über das sich bewegenden Fahrzeug zu lesen, und zusätzlich mindestens eine Fotokamera, die in der Lage ist, im sichtbaren Spektrum zu arbeiten, mindestens eine Videokamera, die fähig ist, im sichtbaren Spektrum zu arbeiten, mindestens einen Funkempfänger, mindestens einen Radarsensor, mindestens einen Infrarot-Empfänger, mindestens einen Infrarot-Radar und/oder mindestens ein Laser-Ortungsgerät enthält.

7. System nach Anspruch 6, wobei jeder der stationären Überwachungs-Punkte zusätzlich mit einem akustischen Schwellenwert Sensor zum Nachweis und/oder zur Identifizierung eines sich nähernden Fahrzeugs ausgestattet ist.

## Revendications

1. Système automatique de surveillance du trafic comportant des dispositifs pour la lecture des informations provenant des véhicules qui sont équipés de moyens d'identification, pour suivre leurs mouvements par rapport à leur conformité avec les règles du code de la circulation routière, le système comprenne un lecteur radio automatique et un appareil de traitement des informations concernant des situations de véhicules et de la route, et le système comprenne des outils logiciels pour la détermination automatique des paramètres de mouvement des véhicules et leur comparaison avec les règles permises selon le code de circulation routière pour la section particulière de la route, et des outils logiciels pour la détermination automatique des contraventions de la code de la circulation routière et pour la détermination des décisions à ce sujet,
**caractérisé en ce que** le système comprend une pluralité de points de contrôle fixes, chacun d'eux a une source d'énergie choisie dans le groupe constitué par la batterie, et/ou l'énergie solaire, et/ou un réseau d'alimentation en énergie éolienne et/ou un réseau d'alimentation électrique,
chacun des points de contrôle fixes est équipé d'un module de radiocommunication mobile, des moyens de communication, de lecture automatique et de traitement pour capter des informations radio concernant le véhicule contrôlé et la situation routière, des outils logiciels pour la détermination automatique des paramètres de mouvement des véhicules et pour les comparer avec celles des règles permises selon le code de la circulation routière pour la section particulaire de la route, et comprenant d'outils logiciels pour la détermination automatique des contreventions des règles du code de circulation et de situations exceptionnelles et pour prendre des décisions y relatives, pour le transfert automatique de ces décisions ou des informations sur des contraventions de la code de la circulation routière et des événements exceptionnelles par le module de radiocommunication mobile via un réseau de radiocommunication mobile du point de contrôle fixe à une station de base d'un gestionnaire de réseau de communication, et enfin l'information est transmise par le moyen de l'internet à un système de base de données, ce système comprenne des outils logiciels pour communiquer les décisions concernant les situations exceptionnelles à un poste de surveillance de véhicule, dans lequel chaque véhicule est équipé en plus de la plaque d'immatriculation avec un moyen d'identification contenant une balise à radio, tel que ses signaux peuvent être reçus par les récepteurs des points fixes de surveillance du trafic.

2. Système selon la revendication 1, dans lequel l'outil logiciel du système de base de données est programmé pour la prise de décision automatique.

3. Système selon la revendication 1, dans lequel les outils logiciels sont programmés pour la transmission des décisions au transgresseur pour leur accomplissement par le réseau de radiocommunication mobile et l'Internet.

4. Système selon la revendication 1, comprenant un outil logiciel qui est programmé à surveiller l'accomplissement des décisions.

5. Système selon la revendication 1, dans lequel la source d'énergie est une batterie rechargeable.

6. Système selon la revendication 1, dans lequel ledit dispositif automatique de lecture et de traitement de chaque point de surveillance fixe pour détecter des informations radio relatives au véhicule contrôlé et la situation routière sont capables de lire des informations électromagnétiques relatives au véhicule en mouvement, et comprenant en outre au moins un appareil photo, qui est capable de fonctionner dans le spectre visible, au moins une caméra vidéo qui est capable de travailler dans le spectre visible, au moins un récepteur radio, au moins un capteur radar, au moins un récepteur infrarouge, au moins un radar infrarouge et/ou au moins un localisateur laser.

7. Système selon la revendication 6, dans lequel chacun des points de surveillance stationnaire est équipé en outre d'un capteur de seuil acoustique pour la détection et/ou l'identification d'un véhicule qui s'approche.
